# EUROPEAN PATENT SPECIFICATION

(11) **EP 3 164 781 B1**
(45) Date of publication and mention of the grant of the patent: **11.03.2020**
(21) Application number: 15815305.6
(22) Date of filing: 02.07.2015
(51) Int. Cl.: G06F 1/26, H02J 7/00

(54) **CLOUD BASED POWER MANAGEMENT SYSTEM FOR ELECTRONIC DEVICES**
CLOUD-BASIERTES LEISTUNGSVERWALTUNGSSYSTEM FÜR ELEKTRONISCHE VORRICHTUNGEN
SYSTÈME DE GESTION DE PUISSANCE BASÉ SUR L'INFORMATIQUE EN NUAGE POUR DISPOSITIFS ÉLECTRONIQUES

(30) Priority: 02.07.2014 US 201462019907 P
(43) Date of publication of application: 10.05.2017
(73) Proprietor: Humavox Ltd., Raanana 4366517 (IL)
(72) Inventor: LACHMAN, Omri Yaacov, 4340523 Ra'anana (IL)
(74) Representative: Hocking, Adrian Niall
(86) International application number: PCT/IL2015/050689
(87) International publication number: WO 2016/001931

(56) References cited:
- WO-A2-2013/019989
- US-A1- 2001 022 509
- US-A1- 2012 324 259
- US-A1- 2013 289 904
- US-A1- 2014 136 380
- US-A1- 2014 136 380
- US-A1- 2014 173 304

## Description

### FIELD OF THE INVENTION

The invention is directed to dynamic energy management system for electronic devices, particularly handheld, portable electronic devices and Internet of All of Things (IoT) devices. The invention is further directed to a cloud base intelligent data analytic system capable of deriving and cross-analyzing power management parameters, users' preferences and behavior related to power management of electronic devices obtain from multiple charging stations and connected electrical devices across the globe.

### TECHNOLOGICAL BACKGROUND

In the new era, when more and more electrical devices are coming into our lives and used by children and adults on a regular basis for elementary everyday activities, the need to collect data about the real power consumption and requirements of these devices become more and more crucial.

Data collection rates in recent years are increasing as more data is collected to support effective operation of systems.

When it comes to charging profiles of electrical devices and their power requirements the only available data is data obtained from the manufacturers of the devices and/or from the battery manufacturers.

Thus, there is a real need for a power management database that contains real time power consumption parameters and charging profiles of electrical devices to better understand, monitor and manage such devices.

WO2013/019989 discloses an electric vehicle charging system which manages the charging operations of electric vehicles to reduce cost and usage and increase the stability of local power stations.

### SUMMARY OF THE INVENTION

The invention is directed in one aspect to a connected charging device configured to be paired with at least one chargeable device for performing a charging session of said at least one chargeable device, wherein during said charging session the charging device is configured to store at least one real-time data related to the power/charging status of the at least one chargeable device and transmit the data to a cloud based data store and analytics module, together with said charging device ID for monitoring power profile behaviour of said at least one chargeable device, wherein said power profile behaviour is obtained by real time data of performances and functionality parameters measured during said charging session and characterized in that said real time data of performances and functionality parameters measured during the charging session is compared to manufacturer and/or designer data specification of each chargeable device and/or the power components of each chargeable device so as to allow analysis of said data.

The real-time data related to the power/charging status of the at least one chargeable device may be but not limited to, the chargeable device identification number (ID), the battery status of said chargeable device at the beginning of said charging session, the battery status of said chargeable device during charging session, the charging start time, the battery status of said chargeable device at the end of said charging session the charging end time, the charging end reason, and the charging profile.

The real time data transmitted to the cloud based data store and analytics module, together with said charging device ID is used for at least one of the following power management activities: managing the charging profile of said at least one device under charge, providing notification services to clients, providing application services to clients, allowing override of charging profile versions and version updates, allowing forced power saved operation mode to said at least one chargeable device.

In some embodiments, the real time data of performances and functionality parameters measured during the charging session is compared to plurality of data obtained by other connected charging devices so as to create a real life power requirement and usability pattern database of chargeable devices. The database may further be configured to contain data related to power requirements and usability pattern directly from at least one of: smart chargeable devices while not being charged and connected non-chargeable devices.

Another main aspect of the invention, is directed to a system comprising a cloud based data store and analytics module; said system is configured to receive data from an at least one charging device; wherein said data being received during a charging session performed by said at least one charging device, wherein said data being related to the power/charging status of a chargeable device being charged by said charging device during said charging session; wherein said analytic module is configured for analysing said data and for managing said charging device and/or chargeable device as a result of said analysis. Managing of said charging device and/or chargeable device is performed by providing notification messages and/or applications services to at least one client, said client is functionally connected to said charging device and/or chargeable device.

In some embodiments, the notification message are being for notifying said client of said chargeable device about a problem in said charging session, or for forcing power save operation mode to said chargeable device, or for changing operation of said chargeable device.

The invention is further directed to a power management system comprising:
a. at least one connected charging device as previously described which is configured to be paired with at least one chargeable device for performing a charging session of said at least one chargeable device;
b. at least one chargeable device configured to be paired and charged by said connected charging device; and
c. a cloud based data store and analytics module configured to obtain at least one real time data related to the charging session for storing and managing the power consumption profile of said at least one chargeable device and provide cloud based services to a client of said cloud data store and analytic module.

The real-time data related to the power/charging status of the at least one chargeable device is selected from the group consisting of: the chargeable device identification number (ID), the battery status of said chargeable device at the beginning of said charging session, the battery status of said chargeable device during charging session, the charging start time, the battery status of said chargeable device at the end of said charging session the charging end time, the charging end reason, and the charging profile.

The power profile behaviour is obtained by real time data of performances and functionality parameters measured during said charging session. The real time data of performances and functionality parameters measured during the charging session is compared to manufacturer and/or designer data specification of each chargeable device and/or the power components of each chargeable device so as to allow analysis of said data. The client of the power management system may be either one of the manufacturer of the chargeable device, the manufacturer of the battery of the chargeable device, the user of the chargeable device, and a service provider of said chargeable device.

The real time data transmitted to the cloud based data store and analytics module, together with said charging device ID is used for at least one of the following power management activities: managing the charging profile of said at least one device under charge, providing notification services to clients, providing application services to clients, allowing override of charging profile versions and version updates, allowing forced power saved operation mode to said at least one chargeable device. The real time data of performances and functionality parameters measured during the charging session is compared to plurality of data obtained by other connected charging devices so as to create a real life power requirement and usability pattern database of chargeable devices. In addition, the real life power requirement and usability pattern database of plurality of chargeable devices is further configured to contain data related to power requirements and usability pattern directly from at least one of: smart chargeable devices while not being charged and connected non-chargeable devices.

### BRIEF DESCRIPTION OF THE DRAWINGS

**Figure 1** is a high level schematic illustration of power management system architecture in accordance with examples of the invention.
**Figure 2** is a schematic diagram illustrating an optional data flow from a connected charging device/connected charging station/connected device to a cloud base power management system and optional beneficiaries of this system.
**Figure 3** is schematic flow chart illustrating a logical data flow during one charging session via a connected charging device.
**Figure 4** is a schematic illustration of an optional use-case scenario illustrating charging related data collection from a typical hearing aid device and transformation of the data into valuable services (notifications and applications) to optional beneficiaries.
**Figure 5** is a schematic illustration of another optional use-case scenario illustrating charging related data collection from a smart watch and transformation of the data into valuable services (notifications and applications) to optional beneficiaries.
**Figure 6** is a schematic illustration of another optional use-case scenario illustrating charging related data collection from plurality of bracelets of an amusement park and transformation of the data into valuable services for the manufacturer and for the service provider (park management).

### DESCRIPTION OF EMBODIMENTS OF THE INVENTION

The invention is aimed to provide a dynamic Power Management System (denoted hereinafter: **PMS**) for electronic devices. One of the main advantage and unique character of the novel energy management system provided herein over the prior art is its dynamic, cloud-based database and analytic sub-system (denoted hereinafter: "**CPM**" that is capable to derive and cross-analyze power management parameters from multiple connected charging devices and/or connected charging stations across the globe configured to store and share data related to power management and charging session of chargeable device. The dynamic power management and analytic system of the invention may further obtain data from chargeable and non-chargeable electronic devices having ability to share data with the cloud power management sub-system of the invention in order to allow the analytical sub-system to further cross the data obtained with the data obtained from the connected charging devices as will be described in details with reference to the drawings below. The term "**connected charging device**" as used herein is referring to a charger configured and operable to charge at least one electronic device for personal or small group usage, to store the data related to the charging cycle and to share the stored data with a web database and analytical power management platform. For example, a charging device at home for a personal or for family usage; a charging device in a car; a charging device at work that may be personal and be used for charging different electronic devices of the same user, or it may be common to a group of employees as long as there are not too many employees. The term "**connected charging station**" as used herein is referring to a charger configured and operable to charge mass amount of electronic device simultaneously that is suitable for use by service providers, such as but not limited to global curriers company that provides to hundred/thousands of employees electronic equipment that must be charged for performing their daily work, such as identification and tracking of packages; amusement parks that provide identification bracelets to each visitor that enters the park; and the like. The connected charging station is further configured to store data related to the charging cycles of each device under charge and to share the stored data in a similar concept as described above with reference to the connected charging device. The charging stations may be of residential, public and governmental use. For the purposes of the present invention, charging devices and charging stations share common characteristics beside the volume of devices to be charged simultaneously in each of them, thus, for simplicity purposes, parts of the description referring to charging devices is also applicable, mutatis mutandis, to charging stations.

The chargeable devices in accordance with the invention may have different types of charging circuit integrated therein for example, a basic circuit configured to support only a pre-programmed charging profile; a charging circuit that is configured to support a charging profile that can be updated by the charging device/station; a charging circuit that supports only a pre-programmed charging profile and gauging of the electric charge going in and out the battery that can report the gauging only to the charging device/station; a charging circuit that supports only a pre-programmed charging profile and gauging of the electric charge going in and out the battery that can report the gauging to the charging station and also directly to the cloud power management sub system; a charging circuit that is configured to support a charging profile that can be updated by the charging device/station and gauging of the electric charge going in and out the battery that can report the gauging only to the charging device/station; a charging circuit that supports a charging profile that can be updated by the charging station and gauging of the electric charge going in and out the battery that can report the gauging only to the charging station and directly to the CPM sub-system.

In accordance with embodiments of the invention the connected charging devices and stations may be of various forms and technologies available in the market including without limitations, wall mount chargers, car chargers, cord chargers, wireless chargers using any method e.g. magnetic field induction, magnetic field resonance, RF (radio frequency) charging, IR charging, ultrasound charging, solar charging, and the like.

### Reference is now made to the figures:

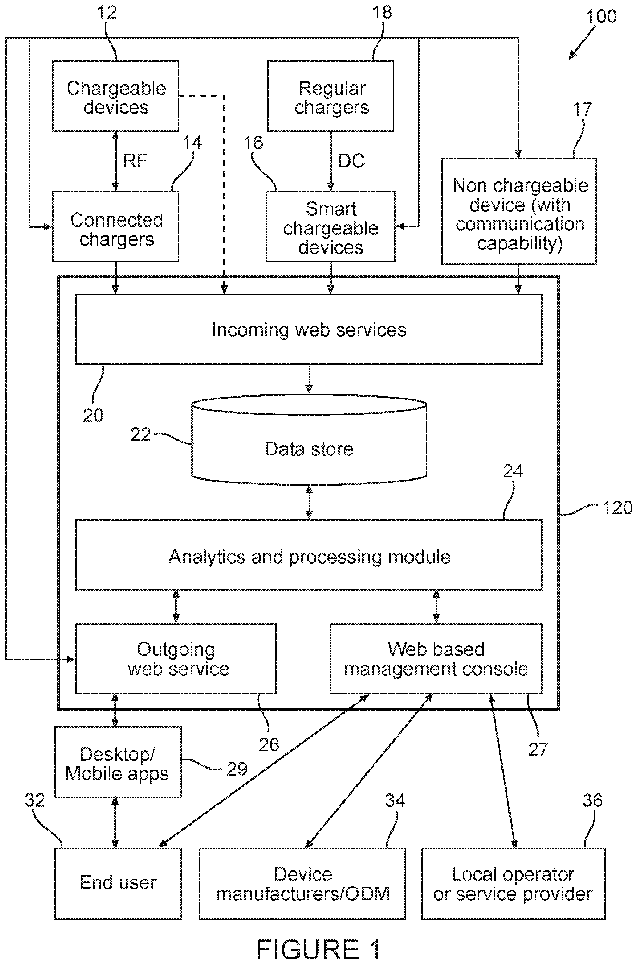

**Figure 1** is a high level schematic illustration of power management system 100 architecture in accordance with examples of the invention. The Power Management System (denoted hereinafter: "**PMS**") is configured and operable to enable a range of mobile devices to enjoy the on-going accumulated power related information to improve the devices charging life cycle, power utilization and energy consumption. Furthermore, it is configured to enable manufactures/ODMs, service providers, and operators to better understand the various aspects of the charging and power utilizations life cycle of electrical devices and batteries.

As illustrated in this figure, a differentiation is made between optional types of chargeable devices and chargers that may contribute data to a cloud power management sub-system 120 (denoted hereinafter: "CPM"). Connected charging devices/stations 14 having connectivity abilities may charge chargeable devices 12 that also have connectivity abilities. In such scenario, these devices enable RF communication between them and further enabling the charger to report charging data to CPM 120 upon performance of a charging session. The chargeable devices 12 may or may not have direct access to the CPM 120. If they do have access, they can complete the connected charger reports by transmitting packets of data to CPM 120, when they are not being charged and/or when the charger does not have internet connectivity. The transmission of data may be performed via a router for example, or directly from the connected charger 14 and/or the chargeable device 12 if they have for example, mobile data or Wi-Fi connectivity of their own. The PMS 100 may also obtain data from chargeable smart Devices 16. Such devices may be charged by connected chargers 14 and also by regular chargers 18. In a scenario that this type of chargeable devices are being charged by a regular non connected charger, the smart chargeable device 16 may still reports to the CPM 120 using their own Wi-Fi or mobile data connectivity. Data may further be transmitted to the CPM 120 by a third type of devices, non-chargeable devices 17 with communication capability. These devices use disposable power sources and have mobile-data or Wi-Fi connectivity. They may report their battery status to the cloud on an on-going basis to enable end users, manufacturers and service providers with battery status view.

As illustrated in this figure, CPM 120 is built as a scalable cloud based application consisting of the following main components:
a. Incoming Web Services 20: These web-services enables standard interface for chargeable devices and connected chargers to report their power consumption and charging related data to the CPMS.
b. Data Store 22: a big data storage facility that stores data reported by incoming web services; pre-processed data analysed by the analytics and processing unit; policies and settings set from the management console 27 or received through the outgoing web services 26; and logs.
c. Analytics and Processing Module 24. This module prepares the stored data for consumption either by pre-processing it or by real-time on-demand digestion per requests coming through the outgoing web services 26 and/or from the web based management console 27.
d. Outgoing Web Services 26: These services enable different clients to request and receive the CPMs 100 processed data, alerts, improved charging process, and usage policies. Clients like desktop application and/or Mobile application 29, connected chargers 14, and chargeable devices with communication capability 16, 17 using these services can receive for example updates, alerts, usage information, charging status, improved charging profiles, virtual charging bar display and multiple devices status.
e. Web Based Management Console 27: This set of user interfaces enables end users 32, manufacturers 34, and service providers 36 to use the different facilities the CPMS 100 offers. End users 32 may use these as a virtual charging bar display for devices that do not have their own display. Manufacturer/ODM 34 may use this to get a statistical view on all of their brand's devices power information or to deploy a new charging profile update to the smart chargers. Service provider/Local Operator 36 may get a multiple device view indicating battery status and alerts and deploy new usage policies to a range of devices.

The Cloud-based Power Management sub-system incoming web services 20 is configured to receive information from connected chargers (14), chargeable smart and non-devices 16 and 12 respectively, and devices that uses disposable batteries 17. These ongoing usage, charging cycle and status reports will be stored in the CPMs cloud storage 22 and will be further analysed and processed by analytical and processing module 24 to become available through the web based management console 27 or consumed through the power management system's outgoing web services 26.

The clients/ beneficiaries of the CPMS 100 of the invention may include device manufacturers/ODM 34, local operators or service providers 36, and end users 32 via desktop or mobile apps 29, and also the connected chargers 14, the chargeable device 12, the chargeable smart devices 16 and further the devices that use disposable batteries 17 that can enjoy improved charging cycles computed gathered, and analysed in the CPMS 100.

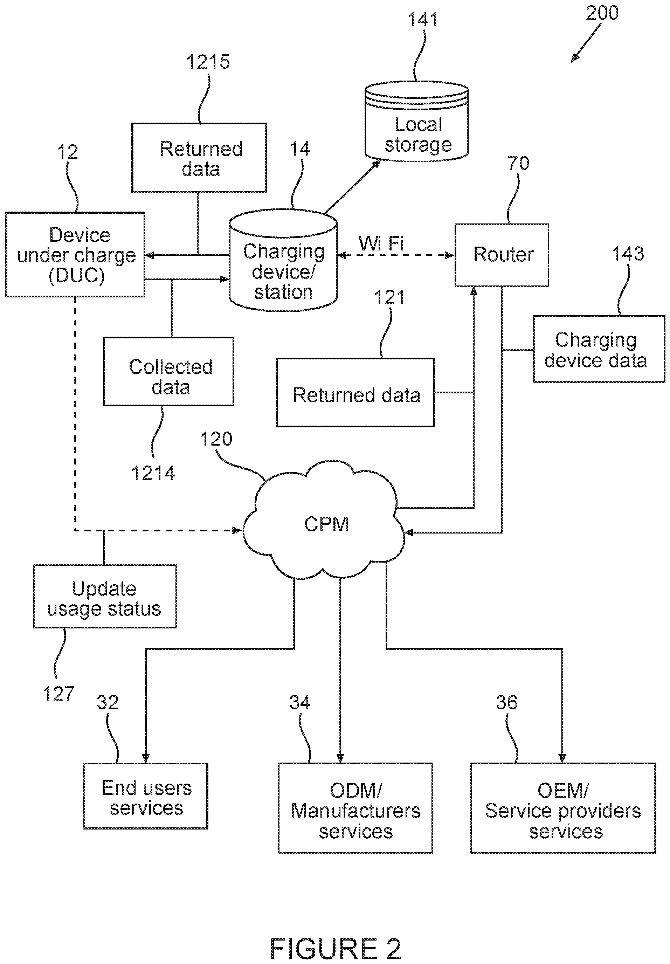

**Figure 2** is a schematic diagram illustrating a general flow of data from a connected charging device and optionally from a smart chargeable device to a cloud base power management system and further to various beneficiaries of the process.

This chart demonstrates the type of information that can be collected in different scenarios that affects the services that are enabled as a result. In more details, the device under charge (DUC) 12 first handshake with the charging device 14, for example through RF communication. The charging device 14 pairs with the DUC 12 and the charging sequence starts. During the charging sequence, the charging device will store data (information) 1214 shared from the DUC that relates to the charging process and optionally to the power management of the DUC and save it to a local storage 141 that may be an integral component of the charging device or an external memory unit. The level of information depends on the device's ability to gauge the charging process and the information that the device under charge CPU exposes to the charging sequence. If no gauging is enabled the charging device 14 may store the following basic information: the DUC unique ID, battery status before the charging started; charging start time, battery status during charging; charging profile (constant current (CC) to constant voltage (CV) position on charging curve), charging end time, charging end reason (battery full, charging interrupted, charging error), and charging time.

When gauging is available, the charging device 14 may store, in addition to the basic information the amount of energy charged, and the amount of energy used.

When the CPU of the DUC enables extended data access the charging device 14 will store any available information. This information may include, for example, application usage info, services usage info, and power consumption patterns over time.

If Wi-Fi and Internet connection are available in the charging surroundings, the data gathered will be reported via router 70 to a cloud power management database and analytics services denoted above as CPM sub-system 120. Otherwise, the data will be stored in the charging unit local storage 141, to be synched when connection is available. The charging device 14 in some embodiments of the invention may contain independent transmission abilities. In such example, the reporting of the data to cloud 120 may be obtained from the charging device directly without passing through router 70. In both scenarios, together with the sharing of the collected data, the charging device also share data related to the charger itself 143, such as but not limited to, it IP address and geographical location.

When no internet connection is available, the charging device 14 may use an internal memory, an SD card, a flash USB or a UNC path on the network to store the reported data and the various policy setting that was reported back to the device from the cloud based power management system. Once internet connectivity is available, the charger will synchronize the information back to the cloud.

The charging and power consumption data collected from a specific DUC allows for the first time to track the real time power consumption of the device according to a habits and location of a specific user and to store the data to the unique device ID profile and to compare this data in different layers, e.g. to compare the data to future charging cycles of the device of the same user at similar and different times and locations, to benchmark the data to similar devices (i.e. devices in the same category), and to benchmark the data to other devices having a similar energy profile.

In some specific examples of the invention, assuming that the ODM of the DUC 12 allowed such configuration, the DUC may share with the cloud packets of data while the device is not in a charging session in order to provide additional information about the power management and battery status of the DUC and further to allow crossing that information with data gathered by the charging device during charging sessions for obtaining more accurate analysis. The communication of the DUC with the cloud may be obtained by cellular modem, Wi-Fi communication, and other communication routs available in the art.

Once shared with cloud, the data is analyzed and prepared for various available applications for different clients; some of them are elaborated below:
The end User 32 (i.e. the DUC owner) may be offered with a range of applications and services through SMS, mobile push notifications, mobile apps, desktop and web applications including without limitation, battery status indication; virtual bar for devices that don't have display means; recommended user patterns; user behavior analysis and resulted usage recommendations; battery life exhaustion; power management and charging related notifications; overtime usage; and improved energy charging sessions.

The device manufacturer 34 may be offered with a range of relevant applications that makes usage of the collected and analyzed data. The data collected may be arranged into statistical displays arranged for example by the following available dimensions: geographical location, usage, exhaustion, device models, hardware power consumption, and application level power consumption.

Service providers 36 are offered with a range of relevant applications that makes usage of the power management collected data. These are arranged into statistical displays arranged for example by location, usage, exhaustion of devices and batteries, device models, hardware power consumption, and application level power consumption. In addition they can enjoy further applications, such as but not limited to end user offering management, devices battery status stats and alerts, and big data analysis.

Relevant data is further configured to return back to the charging device 14 so as to improve charging cycle performance and the energy usage efficiency.

In some specific examples, upon understanding that degradation occurred in some batteries of DUCs, the OEM may allow the charging device to override the charging profile stored in the PIMC of the DUC by simply realizing an updated version to the cloud.

In another specific example, upon understanding that the user is operating the DUC in a high power consumption mode the cloud may override the CPU of the DUC and force it to operate in a power save mode. Such exampling scenario may occur when the user of the DUC is a currier employed by an international posting company such as FedEx™ or HDL™ (the OEM in this example), that is operated by Zebra™ Inc. Upon recognition that the user makes undesired usage of the DUC that will accelerate emptying of the battery, and will not allow the user to complete a working day with the DUC, the cloud may override the CPU of the DUC and instruct the CPU to enter into safe mode that allows only applications related to the functionality of the DUC to operate.

Thus, the data gathered may be used to improve the DUC charging by extracting best performance from the battery; to improve battery life expectancy; and to optimize the device usability.

The data gathered may further be used for over the top (OTT) energy management of device in a manner that semiconductors may improve the PIMC base on the real time data they have now; the battery cell OEM may optimize the batteries as they have now a thorough understanding of the functionality of the batteries in real time; and the data obtained may further affect the DUC OEM future features and performance roadmap.

The big data gathered may further affect the energy management efficiency of devices in two main aspects; only the necessary energy will be provided to the DUC during a charging session; and only the necessary energy will be extracted from the grid.

As mentioned above, in addition to the applications that may emerge from the collected data, various notifications and alerts may be produced that may be relevant to the various beneficiaries of the cloud base power management system of the invention. Some non-limiting examples are notifications to the user and/or to the service provider that battery is low and that the specific device will have to be charged earlier than expected according to the data sheets or spec of the device; power intelligence; and malfunction of specific device/ devices that may require a recall to the devices.

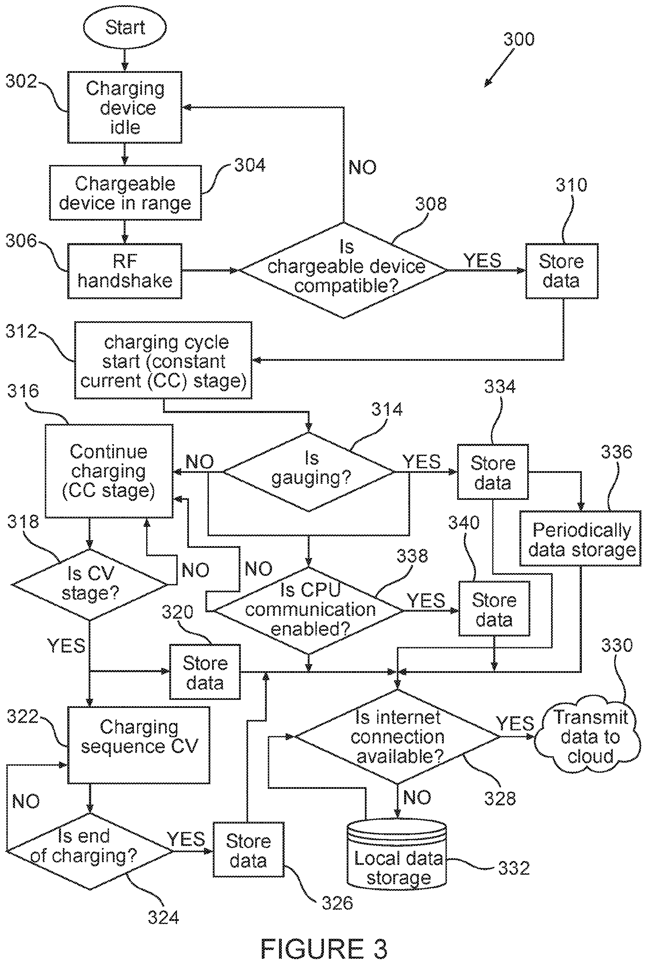

**Figure 3** is schematic flow chart illustrating an example of a logical data flow between a connected charging device and a chargeable device during one charging session.

At the start point (step 302) the charging device is on an idle cycle until a chargeable device is recognized (step 304) in its vicinity, for example within a charging zone. At the next step (step 306), a handshake such as but not limited to RF handshake is taking place, and then (step 308) the chargeable device is checked for compatibility. If the chargeable device is not compatible then the charger goes back to idle cycle (step 302). If the chargeable device is compatible the handshake ends with the charging device store data (step 310) such as the chargeable device unique ID (this unique ID embeds a singular device entity so as to identify the device manufacturer, the device model, and with further analysis (optionally) the device selling entity); the time and the charging start time. At the next step (step 310) charging session starts with constant current (CC) sequence. At the next step (step 314) gauging availability is checked against the device under charge and/or against the charging device local storage. If gauging is available a gauging enabled charging cycle initiates (step 334) and periodically gauging data output is stored (step 336) providing information such as time elapsed from charging, charging status, charging profile and end of charging.

If gauging is not available, the charging device will proceed with a regular constant current (CC) to constant voltage (CV) charging cycle (step 316). In a non-gauging charging cycle, the charging device will be looking for the CC to CV point (step 318), and store it when reached (step 320). Next, the charging device will continue in CV charging (step 322) and check for "end of charge" point (step 324). When reaching end of charge point the data is stored (step 326).

The charging device will check against the device under charge or against its local storage for available CPU information (step 338) and store it if available (step 340). Such data may contain information related to energy usage breakdown.

For each storage event, the charging device will look for available internet connectivity (step 328). If such connectivity is available, the charger will negotiate the cloud web services and transmit them the data over secure channel (step 330). If such connectivity is not available, the charger will store the information in its local storage (step 332) for future synch with the cloud web services at a later time.

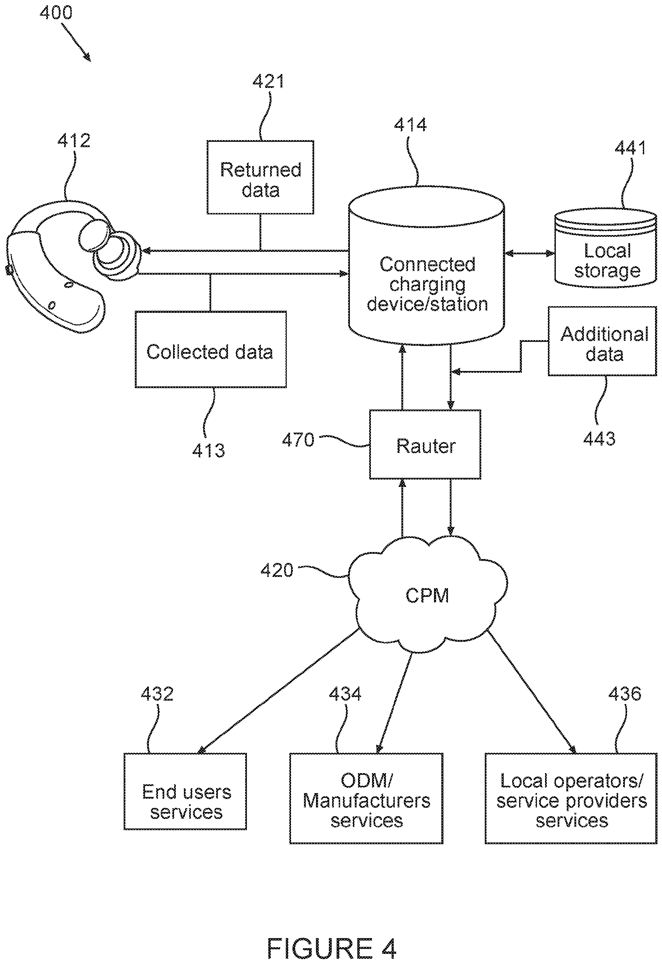

**Figure 4** is a schematic illustration of an optional use-case scenario 400 illustrating charging related data collection from a typical hearing aid device and transformation of the data into valuable services (notifications and applications) to optional beneficiaries.

More specifically, upon recognition and successful handshake between hearing aid device 412 (the DUC in this scenario) and connected charging device 414 data is collected 413 and saved on local storage 441 that is functionally connected to connected charging device 414. Typical hearing aid devices do not have display means and as such it is hard to know when the battery needs charging and to be prepared for that in time. In addition, the power consumption of such devices varies according to the surroundings and increase in noisy places. The combination of this results in an uncertainty condition to the user that can easily find himself with uncharged device unable to properly function according to its ordinary day schedule and even in a life threatening situation. The novel power management system of the invention may prevent such scenario for such user. In a similar manner as described in the above, the collected data obtained from the hearing aid device may contain information of the specific device unique ID, the battery status before the charging was started, the battery status during the charging and at the end of charging, charging start time and charging end time, charging end reason, charging profile, and the like. The level of information collected depends on the device abilities, if is contains a gauging element. Upon connection to the internet, the collected data 413 as well as additional data 443 related to the charging device such as the charging device unique ID and its geographical location are uploaded via router 470 to a cloud power management sub-system 420 to allow big data analysis as illustrated in details with reference to figures 1 and 2. The analytics results and data gathered in this case may be used as services and/or applications for the end user and provide him for example, to obtain for example a virtual bar indicating the charging level of hearing aid 412, to obtain alerts when battery needs charging, to obtain alerts when battery exhausted and replacement is required, to obtain recommended charging frequency and duration based on observed usage, weather conditions and device benchmark, and further to obtain a virtual usage bar that may indicate the user the charging status of the hearing aid device before the battery empty.

Additionally, the data analyses may serve other players such as service providers 436, manufacturers and ODMs 434 to monitor defects in specific line of device and recall the devices, to identify decrease in performances of devices due to battery function and correct the performances by changing the charging profile of the devices in accordance to an updated charging profile that the manufacturer provides to the CPM sub-system 420 that is further downloaded to the connected chargers to override the former profile, a simple update performed through the charging device that is invisible to the end user that can now enjoy better performance of the device.

In a different scenario, hearing aid device 412 may be one of plurality of similar devices that belongs to residents in geriatric house, wherein the stuff treating them are charge the devices together every evening in a connected charging station and provides the users with charged devices every morning. In such example, the power management system may allow to identify malfunctioned devices and alert the stuff in advance.

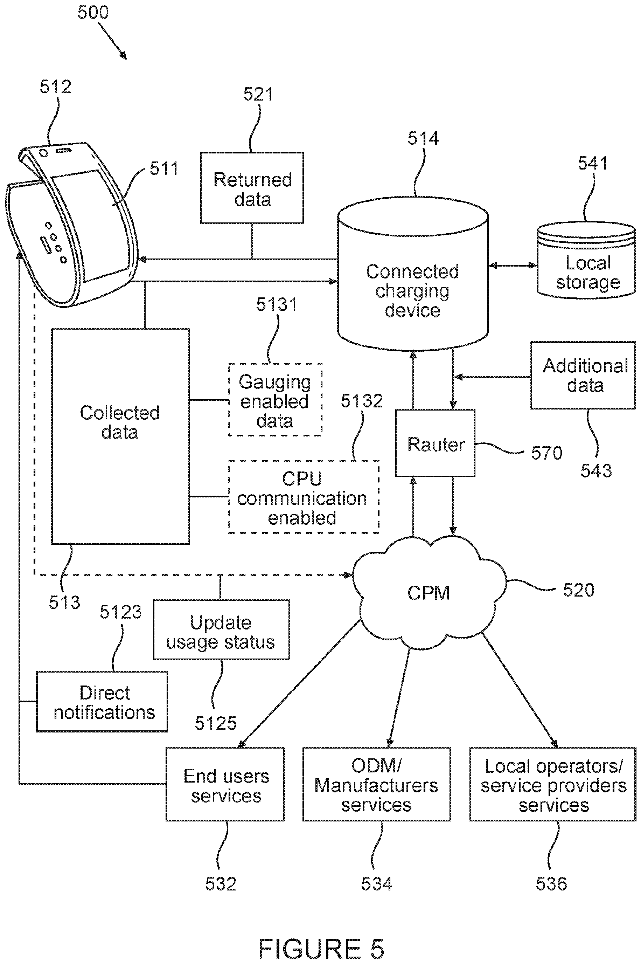

**Figure 5** is a schematic illustration of another optional use-case scenario 500 illustrating charging related data collection from a smart watch 512 having display means 511 and transformation of the data into valuable services (notifications and applications) to optional beneficiaries 532, 534, and 536 via CPM sub system 520. In this specific example the chargeable device is a smart device that has abilities to submit relevant data to the CPM directly when it is not being charged and for example to provide data as to its usage status 5125. The data collected during charging may be similar to the data obtained from the hearing aid device illustrated in figure 4, but also it may be advanced data for example gauging enabled data 5131, and even more advanced data if a CPU communication between the device 512 and connected charging device 514 and the cloud power management subsystem 520. The communication as before may be direct communication if the devices comprise such communication enabling component or via router 570. Data may return 521 to the smart device by the same route, for example by overriding a charging profile with improved version that is downloaded to the charging device and then executed on the smart device during charging.

Similar to the example provided with reference to figure 4, the big data analysis and specific device information available through the power management system of the invention, may be used for various services by different clients such as local operators/service providers 536, ODM/manufacturers 534 and the end users 532. The service provider may have power usage reports, applications usage reports, brand loyalty reports, and else. The manufacturer may obtain valuable real time data and analytics as to charging profile according to location, power usage, app usage, exhaustion, device models, hardware power consumption, and application level power consumption. In this specific example, the end user may use direct notification 5123 to the smart device as in this scenario the display means allows that.

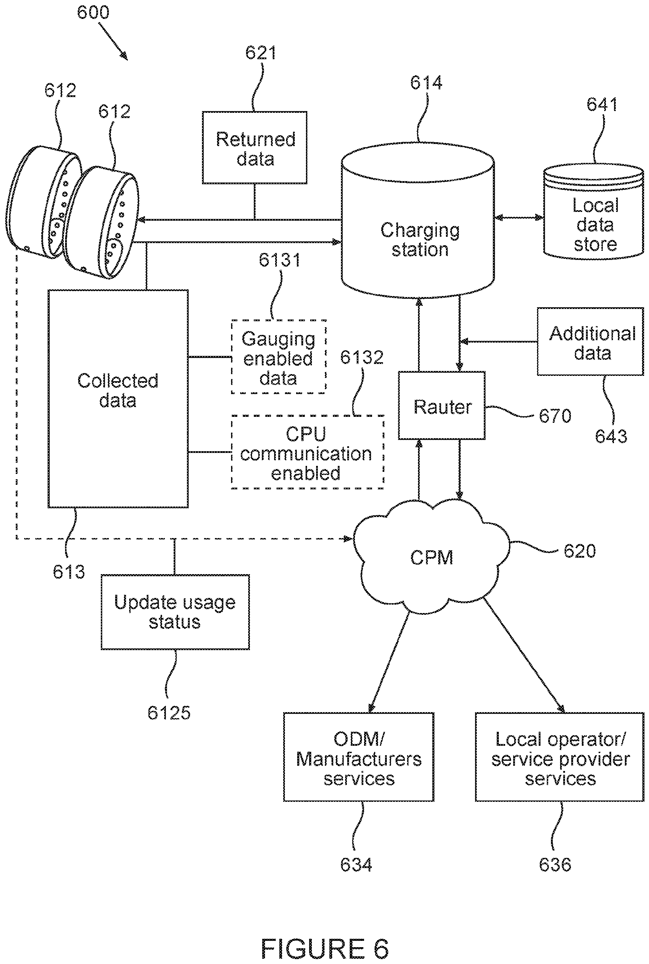

**Figure 6** is a schematic illustration of another optional use-case scenario 600 illustrating charging related data collection from plurality of bracelets 612 of an amusement park and transformation of the data into valuable services for the manufacturer 634 and for the service provider 636 that in this specific case is the park management team.

The unique features in this example are that mass amount of bracelets 612 may be simultaneously charged at the end of the day in one or more charging stations 614. The next day, the charged bracelets are configured to be distributed to the visitors of the park for monitoring and security purposes for example. Malfunctioned bracelets for example, may easily be identified and put aside. During the day, when they are not being charged the bracelets may update the CPM with their charging status and as well as with additional data 6125 submitted directly to the CPM 620. In a scenario that the end user make undesired use with the bracelet that cause the bracelet to use a lot of power and empty the battery, the service provider may obtain a notification from the CPM and consequently may overtake control on the specific device and force it to enter into a safe economic operation mode.

Also shown in this figure are local data storage 641 of charging station 614, additional data 643 that includes at least the unique ID of the charging station and its location, router 670, collected data 613 with basic information about the charging session and optionally more advance data from gauging 6132 if exist and from the CPU of the device 6132 if CPU communication is enabled.

A specific example of the ability of the PWS to improve the charging and usability of devices is further illustrated in the following example:
A Li-ion battery longevity depends on charging profile in a manner that a lower voltage at the constant voltage phase, makes the battery life longer. Also, a Li-ion battery capacity depends on the charging profile in a manner that a higher voltage at the constant voltage phase, makes the battery capacity bigger. In both cases the battery capacity is going down with every charging cycle. Charging the battery at constant voltage of 4.1V for example, will make the battery life longer, but with relatively low capacity, while charging the battery at constant voltage of 4.3V will maximize the battery capacity but shorten its life. Assuming that it is desired having a constant capacity while maximize battery life can change the constant voltage level according to the battery life: 500 cycle at 4.1V, then 400 cycles at 4.2V, then the charger works at 4.3V. The CPM sub-system may count the number of cycle and give instruction to the charging circuit of the charging devices accordingly. In addition, the cloud can also optimize the number of cycles according to the data it gather.

In all the examples above, the actual data is mined using a communication protocol that allows extraction of relevant data from each one of the charging devices and/or stations by a cloud based database during the charging process and further storing and analyzing the extracted data for future applications as will described in details above. In order to enable this protocol, both the charging device/station and the device under charge (DUC) should be able to support the protocol.

In accordance with examples of the invention, the charging may also be a wireless charging procedure conducted according to any known wireless communication protocol. Some examples of such protocols are the Power Matters Alliance (PMA) standard, the Qi standard, Humavox Standard, and the A4WP standard. The protocol allows the local energy management O/S installed on the charging device/station to retrieve series of relevant parameters related to the charging session, as well as the DUC energy status. The retrieved parameters values are then being requested by the charging station, using the unique protocol, and provided using the device's existing PMIC (power management integrated circuit). As in non-wireless charging, the parameters may include but not limited to, a unique device I.D., charging curve position (i.e. how much power is actually required for fully charging the DUC), charging rate, battery type used, how many charging cycles since first operation, charging start and end time, and the like. The parameters values may be logged on the DUC memory unit, the charging device/station memory unit, or on both memory units, and further uploaded to the cloud computing database using either one of the DUC or the Charging Station wireless communication hardware such as but not limited to: Wi-Fi, cellular data card (SIM), and other forms of wireless communication available in the art and suitable for such purpose.

In accordance with specific non-limiting examples of the invention, upload of data from the DUC and/or charging station, or both to the cloud based energy management and analytics database may be performed at least twice: at the beginning and at the end of each charging session. At the beginning of each charging session, it allows the charging station to download from the cloud an optimal charging profile for the specific client (based on the client ID) in its specific state, based on data stored and analyzed on the cloud. More particularly, the downloaded data is cross-analyzed with the data taken from the PMIC in the DUC during the live charging session to compile an improved/optimal charging profile by the charging station to support even the utmost "complex" charging profiles by unique battery cells, yet now the charging station is turned "smart" and can perform improved/optimal wireless power transmission to optimally comply with the DUC charging profile; and, at the end of the charging session it allows logging and uploading all data from the last charging session to the database for future usage and analysis.

Upon upload, the recorded values are stored on the cloud database and compared to a cluster of existing recorded values e.g. previous charging cycle patterns, other devices of the same category I.D., group I.D., and the like or other devices of similar energy profile i.e. same charging current, charging voltage, battery type, and other relevant parameters.

Upon completion, the following is achieved: (i) enhanced data on a particular device is stored and become accessible over remote access (cloud), a recommended, personalized and fully optimized charging profile is sent to the charging station, allowing a highly optimized charging session that can now be conducted in the charger/charging station level and not only by the device PMIC or charger integrated circuit as conducted now.

Thus, the novel PMS of the invention is configured and operable to allow at least the followings:
1. Optimal/improved charging profiles, which are always reachable and optimized per device;
2. Big-Data on individual device such as device type, user type, battery type, PMIC type, and the like is accumulated and stored over cloud infrastructures which can become available for data analysis, business intelligence and similar analytics purposes allowing brands and manufacturers to optimize and improve devices, power consumption, and ultimately optimize usability and experience for end-users;
3. The data accumulated can serve for in-depth analytics on energy usability patterns, power consumption, real-life charging patterns, real-life charging cycles, batteries behaviors, and the like.

In the following, a description of additional case scenario is provided (not shown in the figures). In this specific example, a consumer that is using a personal healthcare device (e.g. new generation of wearable ECG monitoring and notification system). At first charging, the device's unique ID establishes a new record on the cloud based power management system of the invention. Every time the user charges his device, all power related parameters throughout the charging session are logged, uploaded and stored. The accumulated usability and charging profile is compared with manufacturer recommendation and datasheet upon fixed period of time e.g. every month.

The PMS now recognizes the real-life power requirement and usability pattern of the device according to the unique way that the specific user is using it. The accumulated data provide vital real-life analytics to the ECG device manufacturer, the device's battery cell manufacturer, the device's power management integrated circuit manufacturer (PMIC), etc. They can tell how performance versus power consumption versus battery cell behavior looks like when data obtained from different users and different countries is cross-analyzed. In addition, the data can also serve consumers who are wondering for instance "how frequently do I need to charge my ECG device?" not by the manufacturer's specifications, but by real-life data taken from real users who are using the device in my country.

In addition, the system can provide real-time alerts to the user, for example: informing the user he/she forgot to charge the device; recognize abnormal charging pattern and advise the user to visit a service station; recognize overheating and advise the user to store the device/charging station somewhere else; inform the user about the battery level and average usage period until charging; by crossing locations, the system can know where the user charges his device typically e.g. overnight at home, 2^{nd} monitoring typically in car charging station, conclusion and advise OEM (original equipment manufacturer): improve and invest in cars charging stations.

Referring to the local process while wireless charging is conducted, a receiving unit (Rx), positioned within a device under charge is communicating with a transmitting unit (Tx) positioned in a charging device/station and communicate in any wireless communication protocol as mentioned above and achieved by using a power management unit (PMIC) that may be a component in the DUC or an integral part of the Rx (dedicated chip). In a specific none limiting embodiment, the communication protocol between Rx and Tx may be based on Scattering parameters values. During a charging session, the wireless charging station can gather information from the DUC and adjust the session according to the gathered information via the communication between the Rx and Tx. The DUC preferably comprises memory storage. The memory storage may be from various kinds, for example, RAM memory, Flash memory, disk-on-key, and others. The DUC further comprises independent communication means such as SIM card, embedded Wi-Fi, external Wi-Fi (dongle) and such. On the other end, the charging station may similarly have independent memory components and communication modules. The communication between the DUC and the charging station may include the following: identify DUC (client) I.D. (i.e. the specific device under charge), such information will allow the charging station in the next charging session to identify the client via its unique client I.D.; identify the position of the DUC on the charging curve; adjust the charging session (power level, frequency, number of feeding (Tx) elements as well as other relevant data for the session based on identification of the client's ID and/or the "client's family"; start charging the DUC; in a scenario that the charging session stop, identifying whether there is a problem or the charging session is completed; log the charging duration and/or the new position of the DUC on the charging curve; log the time elapsed since the last charging session; when the client is a battery, to provide the battery cell life expectancy so as to allow providing PMIC alerts, and further to notify the user and/or the battery Original equipment manufacturer (OEM), and/or the device OEM.

Additionally, Tx may further obtain data related to the following parameters that may be used for data analytics and construction of the PMS of the invention so as to create a cloud based artificial power management intelligence database. Such data may include: cell life expectancy together with an option to alert the user, the device OEM and the battery OEM; the average time between the charging cycles; the average charging duration; the number of fast charging, if presented as a feature; data about reaching boundary conditions; if a battery is about to end its life cycle (die) to send notifications to the user to approach service station; gathering data about the overall efficiency, i.e., Grid to charging station to DUC; data about efficiency vs. performance of the DUC i.e. comparing the power performance efficiency to the device features ON/OFF. Such data may be used for future features roadmap in view of power necessities, and many other data parameters and analysis o/f said parameters, by improving the efficiency of the charging process.

The gathered data may be saved and stored either on the DUC memory, or on the charging station memory, or on both, and each one of them, the DUC and the charging device/station may be capable of transmitting the gathered and saved data to a dedicated energy management and analytic database. In some embodiments of the invention, the data is transmitted by both devices, by the DUC and by the charging station. Transmission to the database may be performed directly from the devices (for example when containing a SIM card). Alternatively, transmission may be performed via Wi-Fi and a router. The transmitted data is first stored in a client's energy performance database that contains data for the specific DUC according to the client ID, and further delivered for analytic purposes to an energy management database. At that point, the system may transmit to the charging station a suggested optimized energy profile for the specific client being charged (two way communication link) according to the data received and to data available in the database for the specific client or based on data obtained and analyzed from other similar clients.

The energy data analytics opportunities and optional actions that may be performed with the data gathered from the DUC and the charging station is almost unlimited. In some embodiments of the invention, the data is first stored to a dedicated device ID profile, and then compared to stored charging cycles. In the next step it is being benchmarked to similar devices (device category), and benchmarked to similar devices with respect to energy profile.

The analytics energy database provided in accordance with the present invention may be used for optimizing a specific device charging. Such optimization will extract best performance from the battery and further, will improve the battery life expectancy, and optimize the device usability.

From an OTT (Over The Top content) energy management point of view, the intelligent energy database is a powerful tool capable of reflecting different OEMs the reality (and terminate their reliance on speculation) and allow for example, semiconductors to improve PMIC, battery cell OEM to optimize batteries, and device OEM to design new future features and performance roadmap.

In a further aspect, the analytics energy database of the invention may play a major role in energy management efficiency in a global aspect as according to the data analysis only the necessary energy will be provided during the charging sessions, and accordingly only the necessary energy will be extracted from the grid, thus, avoiding a huge energy waist and keeping the environment green.

It should be clear that the description of the embodiments and attached figures set forth in this specification serves only for a better understanding of the invention, without limiting its scope. It should also be clear that a person skilled in the art, after reading the present specification could make adjustments or amendments to the attached figures and above described embodiments that would still be covered by the present invention. The invention is defined by the features of the independent claim 1. Preferred embodiments are defined in the dependent claims.

## Claims

1. A connected charging device (14; 114; 414; 514; 614) configured to be paired with at least one chargeable device (12; 412; 512; 612) configured to perform a charging session of said at least one chargeable device (12; 412; 512; 612) being capable during said charging session of storing at least one real-time data and transmit the data to a cloud based data store and analytics module (22, 24), together with an ID of said connected charging device wherein the real time data is related to a power/charging status of the at least one chargeable device (12; 412; 512; 612) for monitoring power profile behaviour of said at least one chargeable device (12; 412; 512; 612), wherein said power profile behaviour is obtained by real time data of performances and functionality parameters measured during said charging session and **characterized in that** said real time data of performances and functionality parameters measured during the charging session is compared to manufacturer and/or designer data specification of each chargeable device (12; 412; 512; 612) and/or power components of each chargeable device (12; 412; 512; 612) so as to allow analysis of said data.

2. A connected charging device (14; 114; 414; 514; 614) according to claim 1, wherein said real-time data related to the power/charging status of the at least one chargeable device (12; 412; 512; 612) is selected from the group consisting of: the chargeable device identification number (ID), the battery status of said chargeable device (12; 412; 512; 612) at the beginning of said charging session, the battery status of said chargeable device (12; 412; 512; 612) during charging session, the charging start time, the battery status of said chargeable device (12; 412; 512; (612) at the end of said charging session, the charging end time, the charging end reason, and the charging profile.

3. A connected charging device (14; 114; 414; 514; 614) according to any of the preceding claims, wherein said real time data transmitted to the cloud based data store and analytics module (22, 24), together with said connected charging device ID is used for at least one of the following power management activities: managing the charging profile of said at least one device under charge, providing notification services to clients, providing application services to clients, allowing override of charging profile versions and version updates, allowing forced power saved operation mode to said at least one chargeable device (12; 412; 512; 612).

4. A connected charging device (14; 114; 414; 514; 614) according to any of the preceding claims, wherein said real time data of performances and functionality parameters measured during the charging session is compared to plurality of data obtained by other connected charging devices so as to create a real life power requirement and usability pattern database of chargeable devices (12; 412; 512; 612).

5. A connected charging device (14; 114; 414; 514; 614) according to claim 6, wherein said real life power requirement and usability pattern database is further configured to contain data related to power requirements and usability pattern directly from at least one of: smart chargeable devices (16) while not being charged and connected non-chargeable devices (17).

6. A power management system (100) comprising:
a. at least one connected charging device (14; 114; 414; 514; 614) as claimed in any one of the preceding claims configured to be paired with at least one chargeable device (12; 412; 512; 612) for performing the charging session of said at least one chargeable device (12; 412; 512; 612);
b. at least one chargeable device (12; 412; 512; 612) configured to be paired and charged by said connected charging device (14; 114; 414; 514; 614); and
c. the cloud based data store and analytics module (22, 24) configured to obtain at least one real time data and provide cloud based services to a client of said cloud data store and analytic module (22, 24).

7. A power management system (100), according to claim 6, wherein said real-time data related to the power/charging status of the at least one chargeable device (12; 412; 512; 612) is selected from the group consisting of: the chargeable device identification number (ID), the battery status of said chargeable device (12; 412; 512; 612) at the beginning of said charging session, the battery status of said chargeable device (12; 412; 512; 612) during charging session, the charging start time, the battery status of said chargeable device (12; 412; 512; 612) at the end of said charging session the charging end time, the charging end reason, and the charging profile, and wherein, said power profile behaviour is obtained by real time data of performances and functionality parameters measured during said charging session.

8. A power management system (100) according to claim 7, wherein said real time data of performances and functionality parameters measured during the charging session is compared to manufacturer and/or designer data specification of each chargeable device and/or the power components of each chargeable device (12; 412; 512; 612) so as to allow analysis of said data.

9. A power management system according to claim 6, wherein said client is either one of the manufacturer of the chargeable device, the manufacturer of the battery of the chargeable device, the user of the chargeable device, and a service provider of said chargeable device.

10. A power management system (100) according to any one of claims 6 to 9, wherein said real time data transmitted to the cloud based data store and analytics module (22, 24), together with said connected charging device ID is used for at least one of the following power management activities: managing the charging profile of said at least one device under charge, providing notification services to clients, providing application services to clients, allowing override of charging profile versions and version updates, allowing forced power saved operation mode to said at least one chargeable device (12; 412; 512; 612).

11. A power management system (100) according to any one of claims 6 to 9, wherein said real time data of performances and functionality parameters measured during the charging session is compared to plurality of data obtained by other connected charging devices so as to create a real life power requirement and usability pattern database of chargeable devices.

12. A power management system (100) according to claim 11 wherein said real life power requirement and usability pattern database of plurality of chargeable devices is further configured to contain data related to power requirements and usability pattern directly from at least one of: smart chargeable devices (16) while not being charged and connected non-chargeable devices (17).

## Patentansprüche

1. Angeschlossene Ladevorrichtung (14; 114; 414; 514; 614), die konfiguriert ist, um mit mindestens einer aufladbaren Vorrichtung (12; 412; 512; 612) gekoppelt zu werden, die konfiguriert ist, um eine Ladesitzung der mindestens einen aufladbaren Vorrichtung (12; 412; 512; 612) durchzuführen, die in der Lage ist, während der Ladesitzung mindestens Echtzeitdaten zu speichern und die Daten zusammen mit einer ID der angeschlossenen Ladevorrichtung an ein cloudbasiertes Datenspeicher- und Analysemodul (22, 24) zu übertragen, wobei sich die Echtzeitdaten auf einen Energie-/Ladestatus der mindestens einen aufladbaren Vorrichtung (12; 412; 512; 612) zum Überwachen des Energieprofilverhaltens der mindestens einen aufladbaren Vorrichtung (12; 412; 512; 612) beziehen, wobei das Energieprofilverhalten durch Echtzeitdaten von Leistungen und Funktionsparametern erhalten wird, die während der Ladesitzung gemessen wurden, und **dadurch gekennzeichnet ist, dass** die Echtzeitdaten von Leistungen und Funktionsparametern, die während der Ladesitzung gemessen wurden, mit einer Hersteller- und/oder Entwicklerdatenspezifikation jeder aufladbaren Vorrichtung (12; 412; 512; 612) und/oder Energiekomponenten jeder aufladbaren Vorrichtung (12; 412; 512; 612) verglichen werden, um eine Analyse der Daten zu ermöglichen.

2. Angeschlossene Ladevorrichtung (14; 114; 414; 514; 614) nach Anspruch 1, wobei die Echtzeitdaten, die sich auf den Energie-/Ladestatus der mindestens einen aufladbaren Vorrichtung (12; 412; 512; 612) beziehen, aus der Gruppe ausgewählt sind, die aus Folgendem besteht: der Identifikationsnummer (ID) der aufladbaren Vorrichtung, dem Batteriestatus der aufladbaren Vorrichtung (12; 412; 512; 612) zu Beginn der Ladesitzung, dem Batteriestatus der aufladbaren Vorrichtung (12; 412; 512; 612) während der Ladesitzung, der Ladestartzeit, dem Batteriestatus der aufladbaren Vorrichtung (12; 412; 512; 612) am Ende der Ladesitzung, der Ladeendzeit, dem Ladeendgrund und dem Ladeprofil.

3. Angeschlossene Ladevorrichtung (14; 114; 414; 514; 614) nach einem der vorhergehenden Ansprüche, wobei die an das cloudbasierte Datenspeicher- und Analysemodul (22, 24) übertragenen Echtzeitdaten zusammen mit der ID der angeschlossenen Ladevorrichtung für folgende Energieverwaltungsaktivitäten verwendet werden: Verwalten des Ladeprofils der mindestens einen Vorrichtung, die geladen wird, Bereitstellen von Benachrichtigungsdiensten an Clients, Bereitstellen von Anwendungsdiensten an Clients, Ermöglichen eines Überschreibens von Ladeprofilversionen und Versionsaktualisierungen und/oder Ermöglichen eines erzwungenen Energiesparmodus für die mindestens eine aufladbare Vorrichtung (12; 412; 512; 612).

4. Angeschlossene Ladevorrichtung (14; 114; 414; 514; 614) nach einem der vorhergehenden Ansprüche, wobei die Echtzeitdaten von Leistungen und Funktionsparametern, die während der Ladesitzung gemessen werden, mit mehreren Daten verglichen werden, die durch andere angeschlossene Ladevorrichtungen erhalten werden, um eine Datenbank für den tatsächlichen Energiebedarf und das Verwendbarkeitsmuster aufladbarer Vorrichtungen (12; 412; 512; 612) zu erstellen.

5. Angeschlossene Ladevorrichtung (14; 114; 414; 514; 614) nach Anspruch 6, wobei die Datenbank für den tatsächlichen Energiebedarf und das Verwendbarkeitsmuster ferner konfiguriert ist, um Daten, die sich auf den Energiebedarf und das Verwendbarkeitsmuster beziehen, direkt von intelligenten aufladbaren Vorrichtungen (16), während diese nicht geladen werden, und/oder von angeschlossenen nicht aufladbaren Vorrichtungen (17) zu enthalten.

6. Energieverwaltungssystem (100), Folgendes umfassend:
a. mindestens eine angeschlossene Ladevorrichtung (14; 114; 414; 514; 614) nach einem der vorhergehenden Ansprüche, die konfiguriert ist, um zum Durchführen der Ladesitzung der mindestens einen aufladbaren Vorrichtung (12; 412; 512; 612) mit mindestens einer aufladbaren Vorrichtung (12; 412; 512; 612) gekoppelt zu werden;
b. mindestens eine aufladbare Vorrichtung (12; 412; 512; 612), die konfiguriert, um durch die angeschlossene Ladevorrichtung (14; 114; 414; 514; 614) gekoppelt und geladen zu werden; und
c. das cloudbasierte Datenspeicher- und Analysemodul (22, 24), das konfiguriert ist, um mindestens Echtzeitdaten zu erhalten und cloudbasierte Dienste an einen Client des Cloud-Datenspeicher- und Analysemoduls (22, 24) bereitzustellen.

7. Energieverwaltungssystem (100) nach Anspruch 6, wobei die Echtzeitdaten, die sich auf den Energie-/Ladestatus der mindestens einen aufladbaren Vorrichtung (12; 412; 512; 612) beziehen, aus der Gruppe ausgewählt sind, die aus Folgendem besteht: der Identifikationsnummer (ID) der aufladbaren Vorrichtung, dem Batteriestatus der aufladbaren Vorrichtung (12; 412; 512; 612) zu Beginn der Ladesitzung, dem Batteriestatus der aufladbaren Vorrichtung (12; 412; 512; 612) während der Ladesitzung, der Ladestartzeit, dem Batteriestatus der aufladbaren Vorrichtung (12; 412; 512; 612) am Ende der Ladesitzung, der Ladeendzeit, dem Ladeendgrund und dem Ladeprofil, und wobei das Energieprofilverhalten durch Echtzeitdaten von Leistungen und Funktionsparametern erhalten wird, die während der Ladesitzung gemessen wurden.

8. Energieverwaltungssystem (100) nach Anspruch 7, wobei die Echtzeitdaten von Leistungen und Funktionsparametern, die während der Ladesitzung gemessen werden, mit der Hersteller- und/oder Entwicklerdatenspezifikation jeder aufladbaren Vorrichtung und/oder den Energiekomponenten jeder aufladbaren Vorrichtung (12; 412; 512; 612) verglichen werden, um die Analyse der Daten zu ermöglichen.

9. Energieverwaltungssystem nach Anspruch 6, wobei der Kunde entweder der Hersteller der aufladbaren Vorrichtung, der Hersteller der Batterie der aufladbaren Vorrichtung, der Benutzer der aufladbaren Vorrichtung oder ein Dienstanbieter der aufladbaren Vorrichtung ist.

10. Energieverwaltungssystem (100) nach einem der Ansprüche 6 bis 9, wobei die an das cloudbasierte Datenspeicher- und Analysemodul (22, 24) übertragenen Echtzeitdaten zusammen mit der ID der angeschlossenen Ladevorrichtung für folgende Energieverwaltungsaktivitäten verwendet werden: Verwalten des Ladeprofils der mindestens einen Vorrichtung, die geladen wird, Bereitstellen von Benachrichtigungsdiensten an Clients, Bereitstellen von Anwendungsdiensten an Clients, Ermöglichen eines Überschreibens von Ladeprofilversionen und Versionsaktualisierungen und/oder Ermöglichen eines erzwungenen Energiesparmodus für die mindestens eine aufladbare Vorrichtung (12; 412; 512; 612).

11. Energieverwaltungssystem (100) nach einem der Ansprüche 6 bis 9, wobei die Echtzeitdaten von Leistungen und Funktionsparametern, die während der Ladesitzung gemessen werden, mit mehreren Daten verglichen werden, die durch andere angeschlossene Ladevorrichtungen erhalten werden, um eine Datenbank für den tatsächlichen Energiebedarf und das Verwendbarkeitsmuster aufladbarer Vorrichtungen zu erstellen.

12. Energieverwaltungssystem (100) nach Anspruch 11, wobei die Datenbank für den tatsächlichen Energiebedarf und das Verwendbarkeitsmuster mehrerer aufladbarer Vorrichtungen ferner konfiguriert ist, um Daten, die sich auf den Energiebedarf und das Verwendbarkeitsmuster beziehen, direkt von intelligenten aufladbaren Vorrichtungen (16), während diese nicht geladen werden, und/oder von angeschlossenen nicht aufladbaren Vorrichtungen (17) zu enthalten.

## Revendications

1. Dispositif de charge connecté (14 ; 114 ; 414 ; 514 ; 614) configuré pour être apparié avec au moins un dispositif chargeable (12 ; 412 ; 512 ; 612) configuré pour effectuer une session de charge dudit au moins un dispositif chargeable (12 ; 412 ; 512 ; 612) pouvant stocker, pendant ladite session de charge, au moins une donnée en temps réel, et transmettre les données à un module de stockage et d'analyse de données basé sur un nuage (22, 24), conjointement avec un identifiant dudit dispositif de charge connecté, les données en temps réel se rapportant à un état d'alimentation/de charge d'au moins un dispositif chargeable (12 ; 412 ; 512 ; 612), pour surveiller le comportement de profil de puissance dudit au moins un dispositif chargeable (12 ; 412 ; 512 ; 612), ledit comportement de profil de puissance étant obtenu à travers des données en temps réel de performances et de paramètres de fonctionnalité mesurés au cours de ladite session de charge, et **caractérisé en ce que** lesdites données en temps réel de performances et de paramètres de fonctionnalité mesurés au cours de la session de charge sont comparées aux caractéristiques des données de fabricant et/ou de concepteur de chaque dispositif chargeable (12 ; 412 ; 512 ; 612) et/ou aux composants de puissance de chaque dispositif chargeable (12 ; 412 ; 512 ; 612) afin de permettre l'analyse desdites données.

2. Dispositif de charge connecté (14 ; 114 ; 414 ; 514 ; 614) selon la revendication 1, dans lequel lesdites données en temps réel se rapportant à l'état d'alimentation/de charge de l'au moins un dispositif chargeable (12 ; 412 ; 512 ; 612) sont choisies dans le groupe constitué par : le numéro d'identification (ID) de dispositif chargeable, l'état de la batterie dudit dispositif chargeable (12 ; 412 ; 512 ; 612) au début de ladite session de charge, l'état de la batterie dudit dispositif chargeable (12 ; 412 ; 512 ; 612) pendant la session de charge, l'heure de début de charge, l'état de la batterie dudit dispositif chargeable (12 ; 412 ; 512 ; 612) à la fin de ladite session de charge, l'heure de fin de charge, le motif de fin de charge et le profil de charge.

3. Dispositif de charge connecté (14 ; 114 ; 414 ; 514 ; 614) selon l'une des revendications précédentes, dans lequel lesdites données en temps réel transmises au module de stockage et d'analyse de données basé sur un nuage (22, 24), conjointement avec ledit identifiant de dispositif de charge connecté, sont utilisées pour au moins l'une des activités de gestion de puissance consistant à : gérer le profil de charge dudit au moins un dispositif sous charge, fournir des services de notification aux clients, fournir des services d'application aux clients, permettre la modification des versions de profil de charge et les mises à jour de versions, activer le mode de fonctionnement à économie d'énergie forcée pour ledit au moins un dispositif chargeable (12 ; 412 ; 512 ; 612).

4. Dispositif de charge connecté (14 ; 114 ; 414 ; 514 ; 614) selon l'une quelconque des revendications précédentes, dans lequel lesdites données en temps réel de performances et de paramètres de fonctionnalité mesurés pendant la session de charge sont comparées à une pluralité de données obtenues à travers d'autres dispositifs de charge connectés, afin de créer une base de données de besoins en énergie et de comportements d'usage réels de dispositifs chargeables (12 ; 412 ; 512 ; 612).

5. Dispositif de charge connecté (14 ; 114 ; 414 ; 514 ; 614) selon la revendication 6, dans lequel ladite base de données de besoins en énergie et de comportements d'usage réels est en outre configurée pour contenir des données se rapportant aux besoins en énergie et aux comportements d'usage directement à partir d'au moins un des éléments que sont des dispositifs intelligents chargeables (16) sans pour autant être en cours de charge et des dispositifs non chargeables connectés (17).

6. Système de gestion de puissance (100) comprenant :
a. au moins un dispositif de charge connecté (14 ; 114 ; 414 ; 514 ; 614) selon l'une quelconque des revendications précédentes, configuré pour être apparié avec au moins un dispositif chargeable (12 ; 412 ; 512 ; 612) de façon à effectuer la session de charge dudit au moins un dispositif chargeable (12 ; 412 ; 512 ; 612) ;
b. au moins un dispositif chargeable (12 ; 412 ; 512 ; 612) configuré pour être apparié et chargé par ledit dispositif de charge connecté (14 ; 114 ; 414 ; 514 ; 614) ; et
c. le module de stockage et d'analyse de données basé sur un nuage (22, 24), configuré pour obtenir au moins une donnée en temps réel et fournir des services basés sur un nuage à un client dudit module de stockage et d'analyse de données basé sur un nuage (22, 24).

7. Système de gestion de puissance (100) selon la revendication 6, dans lequel lesdites données en temps réel se rapportant à l'état d'alimentation/de charge de l'au moins un dispositif chargeable (12 ; 412 ; 512 ; 612) sont choisies dans le groupe constitué par : le numéro d'identification (ID) de dispositif chargeable, l'état de la batterie dudit dispositif chargeable (12 ; 412 ; 512 ; 612) au début de ladite session de charge, l'état de la batterie dudit dispositif chargeable (12 ; 412 ; 512 ; 612) pendant la session de charge, l'heure de début de charge, l'état de la batterie dudit dispositif chargeable (12 ; 412 ; 512 ; 612) à la fin de ladite session de charge, l'heure de fin de charge, le motif de fin de charge et le profil de charge, et ledit comportement de profil de puissance étant obtenu à travers des données en temps réel de performances et de paramètres de fonctionnalité mesurés au cours de ladite session de charge.

8. Système de gestion de puissance (100) selon la revendication 7, dans lequel lesdites données en temps réel de performances et de paramètres de fonctionnalité mesurés pendant la session de charge sont comparées aux caractéristiques des données de fabricant et/ou de concepteur de chaque dispositif chargeable et/ou aux composants de puissance de chaque dispositif chargeable (12 ; 412 ; 512 ; 612) afin de permettre l'analyse desdites données.

9. Système de gestion de puissance selon la revendication 6, dans lequel ledit client est le fabricant du dispositif chargeable ou le fabricant de la batterie du dispositif chargeable ou l'utilisateur du dispositif chargeable ou un fournisseur de services dudit dispositif chargeable.

10. Système de gestion de puissance (100) selon l'une quelconque des revendications 6 à 9, dans lequel lesdites données en temps réel transmises au module de stockage et d'analyse de données basé sur un nuage (22, 24), conjointement avec ledit identifiant de dispositif de charge connecté, sont utilisées pour au moins l'une des activités de gestion de puissance consistant à : gérer le profil de charge dudit au moins un dispositif sous charge, fournir des services de notification aux clients, fournir des services d'application aux clients, permettre la modification des versions de profil de charge et les mises à jour de versions, activer le mode de fonctionnement à économie d'énergie forcée pour ledit au moins un dispositif chargeable (12 ; 412 ; 512 ; 612).

11. Système de gestion de puissance (100) selon l'une quelconque des revendications 6 à 9, dans lequel lesdites données en temps réel de performances et de paramètres de fonctionnalité mesurés pendant la session de charge sont comparées à une pluralité de données obtenues à travers d'autres dispositifs de charge connectés, afin de créer une base de données de besoins en énergie et de comportements d'usage réels de dispositifs chargeables.

12. Système de gestion de puissance (100) selon la revendication 11, dans lequel ladite base de données de besoins en énergie et de comportements d'usage réels de la pluralité de dispositifs chargeables est en outre configurée pour contenir des données se rapportant aux besoins en énergie et aux comportements d'usage directement à partir d'au moins un des éléments que sont des dispositifs intelligents chargeables (16) sans pour autant être en cours de charge et des dispositifs non chargeables connectés (17).
